# NEW EUROPEAN PATENT SPECIFICATION

(11) **EP 0 071 361 B2**
(45) Date of publication and mention of the opposition decision: **19.07.1995**
(45) Mention of the grant of the patent: 10.09.1986
(21) Application number: 82303680.1
(22) Date of filing: 13.07.1982
(51) Int. Cl.: F02F 3/02, F16J 1/04

(54) **Pistons for internal combustion engines**
Kolben für eine Brennkraftmaschine
Piston pour un moteur à combustion interne

(30) Priority: 31.07.1981 IT 6808781; 02.12.1981 IT 6856281
(43) Date of publication of application: 09.02.1983
(73) Proprietor: AE PLC, Rugby Warwickshire CV22 7SB (GB)
(72) Inventor: Bruni, Ludovico, Turin (IT)
(74) Representative: Knott, Stephen Gilbert

(56) References cited:
- EP-A- 30 399
- EP-A- 0 002 520
- EP-B- 30 399
- DD-A- 74 992
- DE-A- 1 450 320
- DE-A- 2 625 191
- DE-A- 2 949 091
- DE-C- 748 938
- FR-A- 608 102
- FR-E- 86 284
- FR-E- 86 284
- GB-A- 582 465
- US-A- 1 864 384
- US-A- 1 864 384
- US-A- 2 705 667
- US-A- 4 058 104
- US-A- 4 178 899
- US-A- 4 274 372
- US-E- 17 193
- DD-Zeitschrift KRAFTFAHRZEUGTECHNIK; Heft 12, 1976, S. 364-367
- Technisches Handbuch, Karl Schmidt GmbH Neckarsulm, 1967, S. 69/70

## Description

The invention relates to a piston for an internal combustion engine comprising a crown, a pair of gudgeon pin bores defined by respective gudgeon pin bosses, first and second bearing surfaces on each side of a plane including the piston axis and the gudgeon pin bore axis, each said first bearing surface being toward the crown end of the piston and extending only partially around the piston, and each said second bearing surface extending only partially around the piston.

A piston of this general type is shown in US-A-2705 667 where the first and second bearing surfaces are formed on a skirt portion and connected by a recessed zone. The two skirt portions are connected to the gudgeon pin bosses by struts having substantial portions parallel to the gudgeon pin bore axis.

US-E-17193 discloses a piston similar to that to which the invention relates but with a second bearing surface which is continuous around the piston and with connecting portions between the first and second bearing surfaces. The lower edge of the upper bearing surface and the upper and lower edges of the lower bearing surface extend in planes normal to the piston axis.

While pistons of this construction can be lighter in weight than conventional pistons, where lateral loads are transmitted to an associated cylinder or liner by a continuous skirt extending all round the piston, they have in general not heretofore achieved any practical success. The reason for this is that the reduced area bearing surfaces of such constructions are not adequately lubricated having regard to the substantially increased pressures on such bearing surfaces. Thus, often, the surfaces have only mixed or boundary lubrication, which can lead to scoring and marking of the piston and greatly increased frictional forces. In addition, there are problems with the rigidity of such separate bearing surfaces; they tend to be free to flex and this can lead to metallurgical failure.

According to the invention, there is provided a piston for an internal combustion engine comprising a crown, a pair of gudgeon pin bores defined by respective gudgeon pin bosses, first and second bearing surfaces on each side of a plane including the piston axis and the gudgeon pin bore axis, each said first bearing surface being toward the crown end of the piston and extending only partially around the piston and each said second bearing surface extending only partially around the piston, the first and second bearing surfaces being formed as segments of a cylinder with the lower edges of the first and the upper and lower edges of the second bearing surfaces lying in respective planes normal to the piston axis, reinforced flanged struts extending normal to the axis of the gudgeon pin bores from each gudgeon pin boss towards both sides of the plane including the piston axis and the gudgeon pin bore axis, said struts each having an end portion at one of said sides of the piston, each said second bearing surface extending between the ends of two of said struts to cantilever the second bearing surface from the gudgeon pin bosses, the lower edge of each first bearing surface being spaced from the upper edge of the associated second bearing surface by an axially and circumferentially extending window, and a chamfer being provided on at least one of the upper and lower edges of each second bearing surface to provide hydrodynamic lubrication over the associated second bearing surface.

The following is a more detailed description of two embodiments of the invention, by way of example, reference being made to the accompanying drawings in which:-
Figure 1 is a side elevation of a first form of piston,
Figure 2 is a section on the line II-II of Figure 1,
Figure 3 is a schematic view from beneath of the piston of Figures 1 and 2,
Figure 4 is a section on the lines VI-VI of Figure 1
Figure 5A and 5B are alternative sections on the line VII-VII of Figure 2.

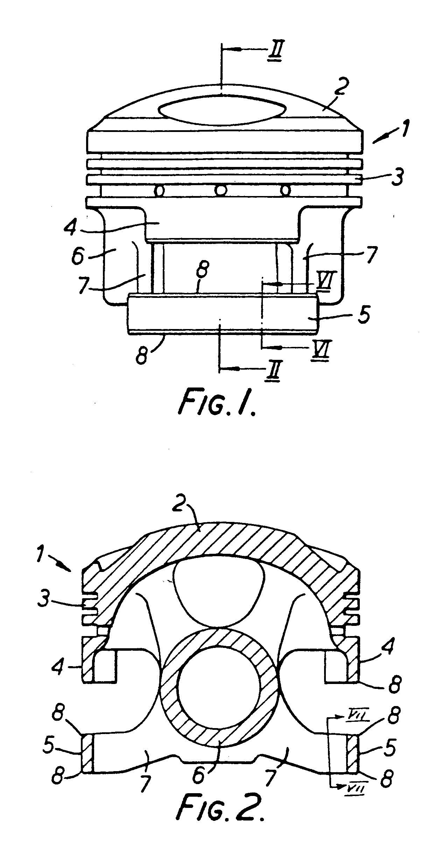

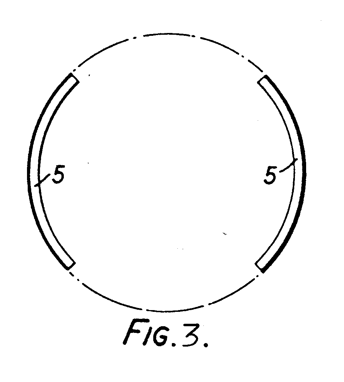

Referring first to Figures 1, 2 and 3, the first piston 1 comprises a crown 2 surrounded by a ring band 3 for receiving the piston rings (not shown). Two gudgeon pin bosses 6 are provided which define a gudgeon pin bore (see Fig.2) extending through the piston.

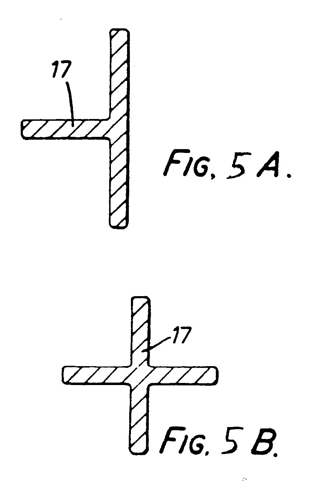

On both sides of a plane containing the gudgeon pin bore axis and the piston axis, the piston is provided with two bearing surfaces 4, 5, spaced by an axially and circumferentially extending gap. The crown-end bearing surface 4 depends from the ring band (see Fig.2) while the remaining, lower, bearing surface 5 is connected to the gudgeon pin boss 6 by a pair of struts 7 (which may be formed as described below with reference to Figs. 5A and 5B). The lower bearing surface 5 is thus cantilevered by the struts 7 from the gudgeon pin boss 6 and is otherwise unsupported. The bearing sufaces 4, 5 are symmetrically disposed about a plane including the piston axis and normal to the gudgeon pin axis (i.e. the plane of the section of Fig. 2), and extend only partially around the circumference of the piston. For example, they may extend up to 45° on either side of this plane.

In a modified arrangement (not shown) the struts 7 may carry the bearing surface 5 in addition to the bearing surface 4.

The bearing surfaces 4, 5 are generally the shape of segments of a cylinder with the lower edge of the crown-end bearing surface 4 and the two circumferentially extending edges of the lower bearing surface 5 lying in respective planes normal to the piston axis. These edges are provided with chamfers 8.

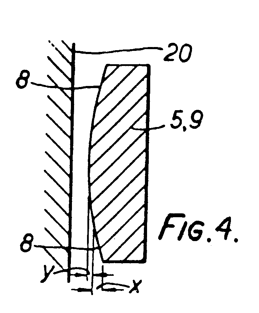

A preferred shape of the lower bearing surface 5 and the associated chamfers 8 is shown in Figure 6 in a very exaggerated manner. The surface 5 is curved in planes including the piston axis with a maximum radial depth (x in Fig. 4) of, for example, 0.02mm. The chamfers 8 are planar in planes including the piston axis, the length of the chamfers being 1mm with the chamfers being inclined at an angle of 15° to the vertical or the length of the chamfers being 1mm with a radial depth (y in Fig. 4) of 0.04mm. The chamfers 8 may, however, be curved and it will be appreciated that they, and the surface, may have any suitable shape. It will also be appreciated that the chamfer 8 on the lower edge of the crown-end bearing surface 4 may be of similar dimensions to the preferred shape described above.

In use, the lateral thrust loads on the piston are transmitted to the associated cylinder or liner 20 (Fig. 4) by the bearing surfaces 4, 5. The presence of the chamfers 8 ensures a supply of lubricant over the bearing surfaces 4, 5 during reciprocation by forming a passage of decreasing dimensions leading to the associated surface. This forces lubricant under pressure over the surfaces and thus ensures full hydrodynamic lubrication. In the lower bearing surface 5, where this is curved as shown in Figure 6, this curvature also assists in ensuring adequate lubrication. The reduced size of the bearing surfaces 4, 5 and the windows thereby defined in the skirt reduces the weight of the piston so reducing the power requirement. In addition, the frictional losses in contact between the piston and the associated cylinder or liner are reduced as a result of the reduced area of the bearing surfaces in comparison with a conventional piston having a continuous skirt. Because the surfaces are adequately lubricated, their spacing can be kept at a constant maximum without the need for an increase in surface area at the centres of the surfaces. These measures together reduce the cost of the piston and improve the performance of an engine fitted with the piston.

## Claims

1. A piston for an internal combustion engine comprising a crown (2), a pair of gudgeon pin bores defined by respective gudgeon pin bosses (6), first and second bearing surfaces (4,5) on each side of a plane including the piston axis and the gudgeon pin bore axis, each said first bearing surface (4) being toward the crown end of the piston (1) and extending only partially around the piston, and each said second bearing surface (5) extending only partially around the piston (1), the first and second bearing surfaces being formed as segments of a cylinder (4,5) with the lower edges of the first and the upper and lower edges of the second bearing surfaces lying in respective planes normal to the piston axis, reinforced flanged struts (7) extending normal to the axis of the gudgeon pin bores from each gudgeon pin boss (6) towards both sides of the plane including the piston axis and the gudgeon pin bore axis, said struts (7) each having an end portion at one of said sides of the piston, each said second bearing surface (5) extending between the ends of two of said struts to cantilever said second bearing surface (5) from the gudgeon pin bosses, the lower edge of each first bearing surface being spaced from the upper edge of the associated second bearing surface by an axially and circumferentially extending window, and a chamfer (8) being provided on at least one of the upper and lower edges of each second bearing surface (5) to provide hydrodynamic lubrication over the associated second bearing surface (5).

2. A piston according to claim 1, characterised in that the or each chamfer (8) is planar or curved in planes including the piston axis.

3. A piston according to claim 2, characterised in that each second surface (5,9) is barrelled so that said surface is curved in planes including the piston axis for directing lubricant over said surface during reciprocation.

4. A piston according to any one of claims 1 to 3, characterised in that each strut (7) has a cross-section of T-shape or +-shape and is cast integrally with the remainder of the piston (1).

## Patentansprüche

1. Kolben (1) für eine Brennkraftmaschine, der eine Überhöhung (2), ein Paar von Kolbenbolzenbohrungen, die jeweils durch Kolbenbolzenaugen (6) definiert sind, erste und zweite Lagerflächen (4,5) auf jeder Seite einer Ebene, die die Kolbenachse und die Achse der Kolbenbolzenbohrung einschließt, umfaßt, wobei jede der ersten Lagerflächen (4) in Richtung auf den überhöhten Endbereich des Kolbens (1) vorgesehen ist, und sich nur zum Teil um den Kolben herum erstreckt, und jede der zweiten Lagerflächen (5) sich nur zum Teil um den Kolben (1) herum erstreckt, wobei die ersten und die zweiten Lagerflächen als Segmente eines Zylinders (4,5) ausgebildet sind, wobei die unteren Kanten der ersten und die oberen und unteren Kanten der zweiten Lagerflächen in entsprechenden Ebenen senkrecht zu der Kolbenachse liegen, sich verstärkte flanschartige Streben (7) senkrecht zu der Achse der Kolbenbolzenbohrungen von jedem Kolbenbolzenauge (6) auf beide Seiten der Ebene zu erstrecken, die die Kolbenachse und die Achse der Kolbenbolzenbohrung einschließt, wobei die Streben (7) jeweils einen Endbereich auf einer der beiden Seiten des Kolbens aufweisen, sich jede zweite Lagerfläche (5) zwischen den Enden von zwei der Streben erstreckt und so die zweite Lagerfläche (5) auslegerartig von den Kolbenbolzenaugen weghält, die untere Kante jeder der ersten Lagerflächen durch einen sich axial und in Umfangsrichtung erstreckenden Schlitz von der oberen Kante der zugehörigen zweiten Lagerfläche beabstandet ist, und eine Abschrägung (8) zumindest an einer der oberen und unteren Kanten jeder zweiten Lagerfläche (5) vorgesehen ist, um eine hydrodynamische Schmierung der zugehörigen zweiten Lagerfläche (5) zu gewährleisten.

2. Kolben nach Anspruch 1, **dadurch gekennzeichnet**, daß die oder jede Abschrägung (8) eben oder gewölbt in Ebenen ausgebildet ist, die die Kolbenachse einschließen.

3. Kolben nach Anspruch 2, **dadurch gekennzeichnet**, daß jede zweite Fläche (5,9) ballig ausgestaltet ist, so daß die Fläche in Ebenen gewölbt ist, die die Kolbenachse einschließen, um während der Hin- und Herbewegung Schmiermittel über diese Fläche zu leiten.

4. Kolben nach einem der Ansprüche 1 bis 3, **dadurch gekennzeichnet**, daß jede Strebe (7) einen T-förmigen oder einen +-förmigen Querschnitt aufweist und einstückig mit dem übrigen Kolben (1) gegossen ist.

## Revendications

1. Piston (1) pour moteur à combustion interne, du type comprenant un fond extérieur (2), deux trous d'axe de piston définis par des bossages respectifs (6), une première et une seconde portées (4, 5) de chaque côté d'un plan contenant l'axe géométrique du piston et l'axe géométrique des trous d'axe, chaque dite première portée (4) étant située vers l'extrémité du fond extérieur du piston (1) et s'étendant seulementen partie autour du piston, et chaque dite seconde portée s'étendant seulement en partie autour du piston (1), la première et la seconde portée ayant la forme de segments de cylindre (4, 5), les bords inférieurs de la première portée et les bords supérieur et inférieur de la seconde portée se trouvant dans des plans respectifs perpendiculaires à l'axe géométrique du piston, des entretoises (7) renforcées par des nervures s'étendant perpendiculairement à l'axe géométrique des trous d'axe à partir de chacun des bossages (6), des deux côtés du plan contenant l'axe géométrique du piston et l'axe géométrique des trous d'axe, lesdites entretoises (7) possédant chacune une partie terminale d'un desdits côtés du piston, chaque dite seconde portée (5) s'étendant entre les extrémités de deux desdites entretoises (7) pour soutenir en porte-à-faux ladite seconde portée (5) à partir des bossages, le bord inférieur de chaque première portée étant séparé du bord supérieur de la seconde portée concernée par une fenêtre s'étendant axialement et circonférentiellement, et un biseau (8) étant formé sur l'un au moins desdits bords supérieur et inférieur de chaque seconde portée (5) pour produire un graissage hydrodynamique sur la seconde portée concernée.

2. Piston selon la revendication 1, caractérisé en ce que le biseau ou chaque biseau (8) est plan ou incurvé dans des plans contenant l'axe géométrique du piston.

3. Piston selon la revendication 2, caractérisé en ce que chaque seconde portée (5, 9) est convexe de sorte que ladite portée est incurvée dans des plans contenant l'axe géométrique du piston afin de diriger le lubrifiant sur ladite portée pendant le mouvement alternatif du piston.

4. Piston selon l'une quelconque des revendications 1 à 3, caractérisé en ce que chaque entretoise (7) possède une section transversale en T ou cruciforme et est coulée d'un seul tenant avec le reste du piston (1).
